(19) Europäisches Patentamt

European Patent Office

Office européen des brevets

(11) EP 0 936 718 A1

(12) EUROPÄISCHE PATENTANMELDUNG

(43) Veröffentlichungstag:
18.08.1999  Patentblatt 1999/33

(51) Int. Cl.⁶: H02J 1/00, H02J 7/00

(21) Anmeldenummer: 98102279.1

(22) Anmeldetag: 10.02.1998

(84) Benannte Vertragsstaaten:
AT BE CH DE DK ES FI FR GB GR IE IT LI LU MC NL PT SE

(71) Anmelder:
• Borkowski, Jens
  01277 Dresden (DE)
• Detzner, Michael
  01159 Dresden (DE)

(72) Erfinder:
• Borkowski, Jens
  01277 Dresden (DE)
• Detzner, Michael
  01159 Dresden (DE)

(74) Vertreter:
Kailuweit, Frank, Dr. Dipl.-Ing. et al
Würzburger Strasse 51
01187 Dresden (DE)

(54) **Verfahren und Anordnung zur Optimierung des Energiemanagements autonomer Energieversorgungssysteme**

(57)    Verfahren und Anordnung zur Optimierung des Energiemanagements werden in mobilen oder stationären Einrichtungen oder Anlagen eingesetzt, bei denen eine Energieversorgung aus stationären Netzen technisch nicht möglich oder wirtschaftlich unrentabel ist.

Die Energieversorgung der autonomen Systeme wird optimiert durch die zielgerichtete Nutzung des Spannungsanstieges eines Speichers nach vorheriger Belastung in der „Selbsterholungsphase". Anhand des Kennlinienverlaufes eines Speichers wird der effektive Zeitpunkt des Eintritts und der Verlaufdieser „Erholungsphase" ermittelt.

Dazu sind alle Speicher mit einem Datenverarbeitungssystem verbunden. Durch den Rechner werden in kleinen Zeitabständen die zeitlichen Änderungen der Ist-Kapazitäten $c_1 \dots C_n$ der Speicher $S_1 \dots S_n$ über der Zeit erfaßt und untereinander sowie mit gespeicherten U(t)- und/oder I(t)- und/oder R(t)- Kennlinienverläufen der jeweiligen Speicher verglichen. Somit besteht die Möglichkeit, beim Unterschreiten des kritischen Grenzwertes der Kapazität $C_{iRest}$ des Speichers $S_i$ einen Speicher $S_k$ auszuwählen, von dem die elektrische Energie für den weiteren Betrieb entnommen werden kann.

Fig.5

## Beschreibung

Die Erfindung betrifft ein Verfahren und eine Anordnung zur Optimierung des Energiemanagements autonomer Energieversorgungssysteme, deren Energieversorgung über Akkumulatoren erfolgt. Derartige autonome Energieversorgungssysteme werden in mobilen oder stationären Einrichtungen oder Anlagen eingesetzt, bei denen eine Energieversorgung aus stationären Netzen technisch nicht möglich oder wirtschaftlich unrentabel ist.

Bekannte Beispiele sind Beleuchtungseinrichtungen an entlegenen Straßen und Gehwegen oder Parkscheinautomaten, die sich in größerer Entfernung von Energie-versorgungsnetzen befinden, so daß ein Anschluß dieser Verbraucher an ein lokales oder regionales Energieverbundnetz aufgrund der Entfernungen betriebswirtschaftlich unrentabel wäre. Diese Verbraucher sind daher mit autonomen Einrichtungen zur Energiegewinnung wie Solarzellen, Windkraftgeneratoren, etc. ausgestattet. Überschüssige Energie wird an Speichereinheiten (Ni-Cd-Akkumulatoren, Blei-Säure-Akkumulatoren) geleitet und kann durch ein Energiesteuerungssystem bedarfsgerecht (z. B. in den Nachtstunden) an den Verbraucher abgegeben werden.

Zum Stand der Technik zählen daneben Lösungen bei mobilen Systemen, wie Kraftfahrzeugen, bei denen Elektroenergie zum Antrieb der Fahrzeuge durch Nutzung des photovoltaischen Effektes (z. B. mittels Solarzellen) aus Lichtenergie gewonnen wird. So wird in der DE 33 47 054 A1 ein Elektromobil mit einem Elektromotor und einer wiederaufladbaren Batterie beschrieben, bei der die Wiederaufladung mittels Solarzellen erfolgt, die auf einem Karosseriedach angeordnet sind.

Um eine Überlastung der wiederaufladbaren Batterie bei der Be- oder Entladung zu vermeiden wird ergänzend in der DE 195 39 695 A1 eine Batteriehandhabungsvorrichtung für ein Elektrofahrzeug beschrieben, welches der Bestimmung des momentanen Ladezustandes der Batterie dient, unabhängig davon, ob sich die Batterie in einem Lastzustand oder in einer Ruhephase befindet.

Ausgehend von der Kenntnis, daß eine zuvor stark belastete Batterie im abgeschalteten Zustand nach einer temporären Erholungsphase eine permanente Entladung erfährt, dient die Batteriehandhabungsvorrichtung dazu, die Restnutzungskapazität einer Batterie auch in einem vom Verbraucher getrennten Zustand zu signalisieren. Damit soll eine rechtzeitige Nachladung oder ein Austausch der betreffenden Batterie ermöglicht werden.

So wird vorgeschlagen, mit Hilfe einer Sensorik, die sich an oder in der Batterie befindet, in Intervallen die momentane Ist-Kapazität zu bestimmen. Dazu werden Meßanordnungen vorgeschlagen, die nur einen geringen Energieeigenbedarf zur Durchführung der Messungen benötigen. Ferner wird vorgeschlagen, unter Einbeziehung einer Hilfsbatterie eine autonome Spannungsversorgung der Sensorik zu realisieren. Diese Hilfsbatterie dient dazu, Verfälschungen der Meßergebnisse an der zu überwachenden Batterie durch eine autonome Stromversorgung zu eliminieren. Die vorgeschlagene Schaltungsanordnung zur Überwachung eines Akkumulators ist aufwendig und verursacht erhöhte Beschaffungskosten.

Die bekannten Lösungen sind durch eine Reihe von Nachteilen charakterisiert.

So können stationäre oder mobile Einrichtungen und Systeme, deren Energiebedarf ausschließlich durch Wind- oder Solarenergie gedeckt wird, nur bei entsprechenden meteorologischen Voraussetzungen sicher und zuverlässig mit Elektroenergie versorgt werden. Gerade in klimatisch wechselhaften Regionen, wie in Nord- und Mitteleuropa, ist deshalb ein zuverlässiger Einsatz derartiger Systeme über längere Zeiträume kaum möglich. Hinzu kommen die vergleichsweise hohen Beschaffungskosten und die geringe elektrische Leistung bekannter Windkraftanlagen und Solarzellen.

Der alternative, ausschließliche Einsatz von Blei-, Nickel-Cadmium-, Silber-Cadmium oder Lithium-Schwefel-Akkumulatoren für die Energieversorgung autonomer Systeme stößt demgegenüber an wirtschaftliche Grenzen, da hochleistungsfähige Akkumulatoren unverhältnismäßig teuer sind und eine relativ begrenzte Lebensdauer haben.

Bekannte Blei-Akkumulatoren, die sich durch ein günstigeres Preis-Leistungs- Verhältnis auszeichnen, haben den Nachteil, daß die Aufnahmekapazität der Zellen vergleichsweise gering ist und die Masse bzw. spezifische Dichte dieser Akkumulatoren beim Einsatz in mobilen Einrichtungen (Kraftfahrzeuge, Unterseeboote) die mögliche Zuladung und den Aktionsradius des Fahrzeugs stark begrenzt.

Aufgabe der Erfindung ist es, ein Verfahren und eine Anordnung zur Optimierung des Energiemanagements autonomer Energieversorgungssysteme zu schaffen, deren Energieversorgung über Akkumulatoren erfolgt. Durch das Energiemanagement soll die durchschnittliche Einsatzdauer und die Verfügbarkeit der autonomen Einrichtungen und Systeme erhöht werden. Gleichzeitig soll die Zuverlässigkeit der Energieversorgungseinrichtung und damit die des gesamten Systems verbessert und die zu erwartende Lebensdauer der eingesetzten Akkumulatoren erhöht werden.

Diese Aufgabe wird erfindungsgemäß durch die kennzeichnenden Merkmale des Hauptanspruches gelöst. Vorzugsweise Weiterbildungen sind in den Unteransprüchen dargelegt.

Die Erhöhung der Einsatzdauer und der Verfügbarkeit der autonomen Einrichtungen und Systeme wird dadurch bewirkt, daß der überraschende Effekt der „Selbsterholung" der vorhandenen Akkumulatoren gezielt ausgenutzt wird.

Dazu wird in Intervallen die zeitliche Änderung der Kapazität (Ladezustand) jedes einzelnen Akkumulators des Systems ermittelt. Sobald die zeitliche Änderung der momentanen Kapazität des Akkumulators über der Zeit einen wählbaren, kritischen Sollwert überschreitet, wird der Energiefluß vom bisher genutzten Speicher (Akkumulator) $S_i$ zum Verbraucher getrennt und zeitgleich ein weiterer Speicher $S_k$ ausgewählt, von dem Energie bezogen wird. Die Auswahl dieses nächsten Speichers $S_k$ erfolgt mit der Maßgabe, daß derjernige Speicher $S_1$ ... $S_n$ ausgewählt wird, der für eine Energieabgabe an den Verbraucher die optimalen Voraussetzungen besitzt.

Als optimal wird ein Speicher $S_k$ dann angesehen, wenn die Ist-Kapazität

$$C_{kost} = I_{k*}t$$

der maximalen Nenn-Kapazität $C_{KNenn}$ dieses Speichers entspricht (Ladezustand voll) oder wenn ein bereits teilweise entladener Speicher $S_k$ nach Abschluß der „Erholungsphase" seine momentane maximale Ladekapazität erreicht hat.

Kenngröße für das Erreichen dieses maimalen Ladezustandes ist der Punkt $C_{tmax}$ im Kennlinienverlauf des jeweils genutzten Akkumulators. Nach Erreichen des Punktes $C_{tmax}$ flacht der Anstieg der Kennlinie $I_k = f(t)$ ab. Damit wird das Ende der Selbsterholungsphase des betreffenden Akkumulators (Speicher $S_k$) indiziert. Nach diesem charakteristischen Punkt tritt kein nennenswerter Kapazitätszuwachs des Speichers über der Zeit mehr auf.

Zu diesem Zeitpunkt $t_{max}$ kann der betreffende Speicher $S_k$ wieder für die Abgabe von Energie an die Verbraucher des Systems genutzt werden. Eine längerer Verzicht auf eine Stromabnahme aus diesem Speicher $S_k$ (Verlängerung der „Schonungsphase" des Akkumulators zum Zwecke des Refreshings) stünde ab diesem Zeitpunkt $t_{max}$ in keinem Verhältnis zu der sonst notwendigen größeren Ahzahl von Speichern $S_n$, um den kapazitiven Gesamtbedarf des Systems an Elektroenergie zu decken.

In der vorstehend genannten Weise werden in differentiell kleinen Zeitabständen dt die zeitlichen Änderungen der Kapazitäten $C_1$ ... $C_n$ aller Speicher $S_1$ ... $S_n$ des Systems über der Zeit t erfaßt und verglichen. Somit besteht die Möglichkeit, beim Unterschreiten des kritischen Grenzwertes der Restkapazität $C_{iRest}$ eines Speichers $S_i$ einen nächsten Teilspeicher $S_n$ zu wählen, der für die Energieabgabe an die Verbraucher temporär die optimalen energetischen Voraussetzungen $C_i(t) = opt!$ aufweist.

Eine Anordnung zur Realisierung des Verfahrens in einem stationären oder mobilen System besteht im wesentlichen aus einer Anzhahl von Speichern $S_1$ ... $S_n$, die gleiche oder unterschiedliche Nennkapazitäten besitzen können. Die verwendeten Speicher können baugleich sein oder sich in Größe und Aufbau unterscheiden. Alle Speicher $S_1$ ... $S_n$ sind über ein Energie-

versorgungsnetz elektrisch leitend mit dem/den Verbraucher(n) verbunden. Die Zuschaltung eines Speichers $S_i$ zum Verbraucher erfolgt über eine Schaltungseinrichtung (1), die mit einem Bordrechner (2) in Verbindung steht. Der Bordrechner (2) ermittelt permanent oder zyklisch die aktuelle Kapazität $C_1(t)$ ... $C_n(t)$ aller Speicher $S_1$ ... $S_n$.

Hat die momentane Kapazität $C_i(t)$ eines Speichers i die untere zulässige Entladungsgrenze $C_{iRest}$ erreicht, erfolgt die Umschaltung zu einem Speicher, der für die Leistungsentnahme am geeignetsten ist.

Nach der Entladung jedes Speichers schließt sich eine belastungsfreie Ruhephase an, die bis zum Erreichen des für die Regenerierung (Refreshing) effektiven Sollwertes dauert. Nachfolgend kann dieser Speicher erneut zur Energieabgabe herangezogen werden.

Die Eignung der Speicher $S_1$ ... $S_n$ für eine erneute Energieentnahme kann durch unterschiedliche Kontrollmechanismen überprüft werden:

1. Aktives System:
Die Eignung der Speicher $S_1$ ... $S_n$ wird durch einen Bordrechner bestimmt, der bei allen Speichern $S_i$ in stochastischen oder determinierten Abständen die Änderungsgeschwindigkeit von Strom und/oder Spannung und/oder Widerstand der Speicher über der Zeit t ermittelt und bei Unterschreiten eines vorgebbaren Grenzwertes den betreffenden Speicher erkennt und für eine nachfolgende Energieentnahme freigibt.

2. Passives System:
Die zulässige Änderung von Strom, Spannung und/oder Widerstand oder vom Produkt oder Quotienten der vorgenannten Kenngrößen über der Zeit wird für den jeweiligen Speicher (als speicherspezifische Kennlinie) ermittelt. Die zugehörigen Umschaltpunkte (Einschaltpunkte $EP_1$ ... $EP_n$ und Abschaltpunkte $AP_1$ ... $AP_n$) werden vor Inbetriebnahme der stationären oder mobilen Einrichtung in einem Speicher des Bordrechners abgelegt. Bei Erreichen eines determinierten Umschaltpunktes der Kennlinie eines Speichers ermittelt der Bordrechner den nachfolgenden Speicher, der die für eine Energieabgabe energetisch optimalen Voraussetzungen aufweist.

Beide Systeme dienen mit gleichem Funktionsprinzip der Ermittlung des Speichers $S_i$, der momentan für eine Energieentnahme bzw. Aufladung geeignet ist. Extern gewonnene Energie, wie Energie aus Luftbewegung, Solarenergie, etc. wird in Abhängigkeit von der zugeführten Leistung in die Speicher eingeleitet, die für die Energieaufnahme am geeignetsten sind oder - in Abhängigkeit vom momentanen Energiebedarf - unmittelbar für den Betrieb der Einrichtung genutzt.

Erfolgt die Zufuhr der extern gewonnenen Energie stoßartig (z. B. Nutzung der Bremsenergie eines Elektrofahrzeuges; Einspeisung von Elektroenergie eines Windgenerators), so wird diese vorzugsweise nicht direkt in die Speicher eingeleitet, sondern dient zunächst zur Aufladung eines oder mehrerer optionaler Zwischenspeicher $SZ_1$ ... $SZ_i$ (z. B. Schwungmassenspeicher), die die zugeführte Energie nachfolgend für die zeitlich optimale Aufladung an die einzelnen Speicher abgeben. Dadurch wird die angebotene Energiemenge optimal genutzt und zugleich eine schädliche Überlastung der Betriebsspeicher $S_1$ bis $S_n$ vermieden. Durch die Aufteilung der nutzbaren Gesamtkapazität $C_{ges}$ des Gesamtsystems in mehrere Teilkapazitäten (Speicher $S_1$ ... $S_n$) tritt nach der Entnahme elektrischer Energie aus dem jeweiligen Speicher $S_i$ und der Umschaltung auf einen neuen Speicher $S_k$ eine Erholung des Speichers (Akkumulators) $S_i$ auf, in deren Folge überraschend ein deutlicher Kapazitätszuwachs $C_i(t+1) > C_i(t)$ im vorher entladenen Speicher $S_i$ zu verzeichnen ist. Durch diesen „Erholungseffekt" des unbelasteten Speichers $S_i$, der nach jedem Lastspiel auftritt, wird die momentane Kapazität dieses Speichers um etwa 10 % erhöht.

Durch die vom Bordrechner überwachte, schonende Ladung und Entladung der einzelnen Speicher $S_1$ ... $S_n$ erhöht sich deren Nutzungsdauer um etwa 20%.

Totalausfälle von Speichern durch zu schnelle Entladung oder das Unterschreiten der zulässigen unteren Grenzspannung der Akkumulatoren werden weitestgehend verhindert.

Durch die zeitlich determinierte oder stochastische Ermittlung der momentanen Kapazitäten $C_{ist}$ und deren Änderung innerhalb differentiell kleiner Zeitabschnitte dt kann auch das Driftverhalten der einzelnen Speicher überwacht werden. So werden frühzeitig Speicher erkannt, deren Lade- und Entladeverhalten nicht normgerecht ist. Diese defekten Speicher können damit präventiv ausgewechselt werden. Die Zuverlässigkeit und Verfügbarkeit des Systems wird dadurch erhöht.

Wird ein derartiges abweichendes Lade- oder Entladeverhalten eines Speichers während des Betriebes einer mobilen oder stationären Einrichtung erkannt, so wird durch den Bordrechner (2) eine Umschaltung auf einen anderen Speicher vorgenommen, der zu diesem Zeitpunkt dem Optimalitätskriterium $C_{ist}$ = opt.! entspicht.

Durch die vorzugsweise Zwischenspeicherung impulsartig zugeführter Energie (z. B. von einem Windgenerator) auf einen oder mehrere Zwischenspeicher $ZS_1$ ... $ZS_n$ kann vorteilhaft ein optimierter Ladevorgang der einzelnen Speicher (Akkumulatoren) $S_1$ ... $S_n$ entsprechend des jeweiligen Entladezustandes [momentane Kapazität $C_{1ist}(t)$ ... $C_{nist}(t)$] durchgeführt werden.

Durch den Bordrechner wird gesteuert, daß bei einem beliebigen Speicher $S_i$ kein direkter Wechsel von Entladung auf Ladung stattfindet, da sonst die regenerative Energie durch den „Erholungseffekt" des Speichers nicht genutzt werden würde.

Überraschend wurde festgestellt, daß die Speicher, die sich in einer Regenerierungs-phase (Erholungsphase) befinden, die zugeführte Energie effektiver aufnehmen, als Speicher, denen während einer Energieentnahmephase gleichzeitig Energie (z. B. in Form von Solarenergie) zugeführt wird.

Die Wirkungsweise des Verfahrens und der Anordnung zur Optimierung des Energiemanagements autonomer Energieversorgungssysteme wird nachfolgend an unterschiedlichen Ausführungsbeispielen erläutert und in den zugehörigen Figuren dargestellt.

**Ausführungsbeispiel 1:**

Es zeigen:

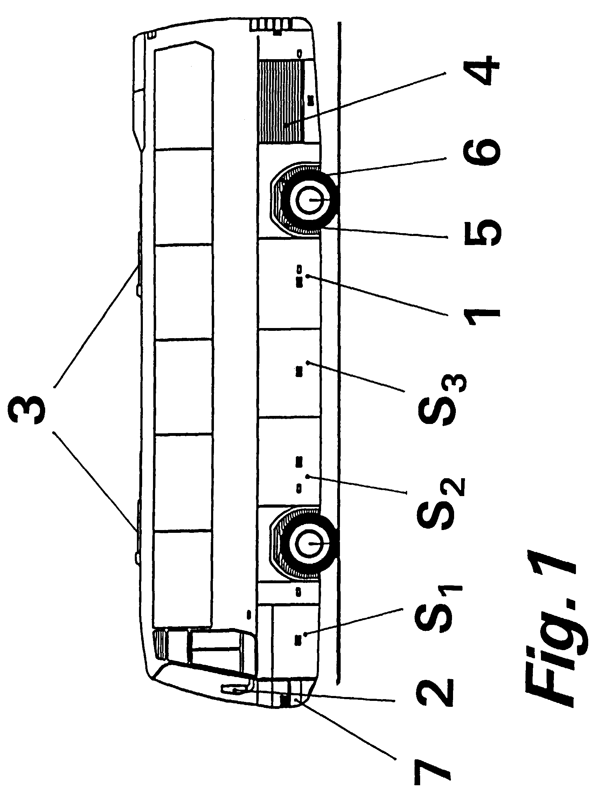

Fig. 1 Eine Seitenansicht eines stilisierten Kraftomnibusses mit den Komponenten der Anordnung,

Fig. 2 das beispielhafte Diagramm eines Fahrspieles des Kraftomnibusses,

Fig. 3 den Kennlinienverlauf U(t) und I(t) eines Blei-Akkumulators,

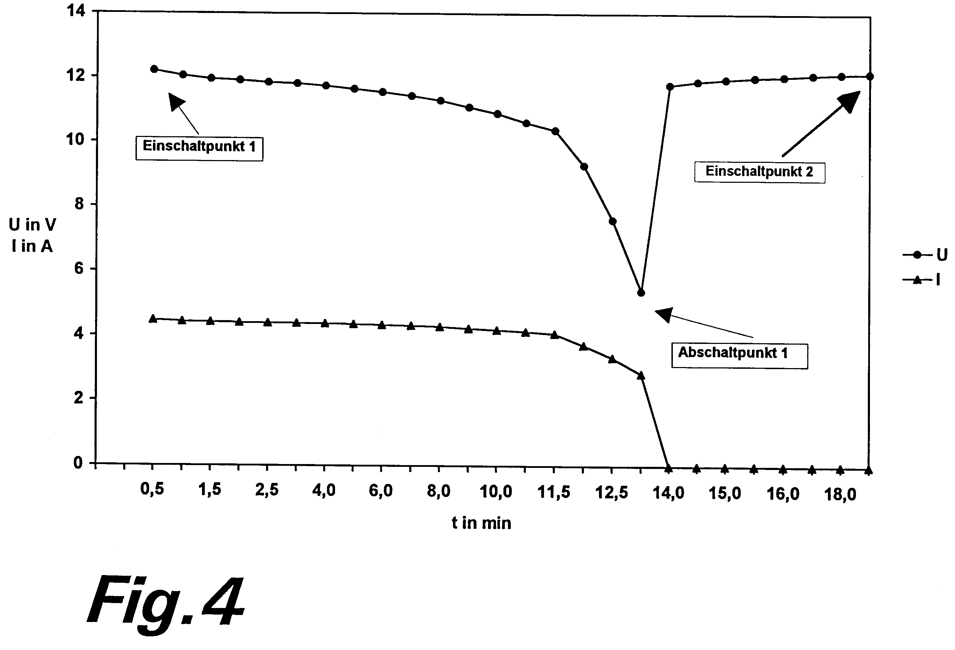

Fig. 4 den Kennlinienverlauf U(t) und I(t) eines Nikkel-Cadmium-Akkumulators.

Die Anordnung zur Optimierung des Energiemanagements wird in einem Elektrobus eingesetzt, der im innerstädtischen Personennahverkehr von Großstädten oder in ökologisch sensiblen Regionen (Luftkurorte) zum Einsatz gelangt.

Der Kraftomnibus besitzt 3 Speicher $S_1$ ... $S_3$ mit unterschiedlicher Nennkapazit $C_{1Nenn}$, die in der Nähe der Fahrzeugachsen angeordnet und über das Bordnetz mit den Verbrauchern verbunden sind. Alle Speicher $S_1$ ... $S_3$ sind bei Fahrantritt vollständig geladen.

Auf der Dachfläche des Busses sind Solarzellen (3) zur externen Gewinnung von Elektroenergie angeordnet, deren Energie ins Bordnetz eingespeist wird. Daneben ist im Heck des Busses ein Schwungmassenspeicher (4) zur Nutzbarmachung der Bremsenergie angeordnet.

Bei Inbetriebnahme des Fahrzeuges und Aktivierung der Steuerung beginnt der Bordrechner (2) mit der permanenten Kontrolle der Kapazitäten $C_{1ist}$ ... $C_{3ist}$ aller Speicher $S_1$ ... $S_3$. Dazu wird bei jedem Speicher $S_i$ die zeitliche Änderung von Strom und/oder Spannung und/oder Widerstand oder dem Produkt oder dem Quotienten der vorgenannten Kenngrößen über der Zeit ermittelt. Der zeitliche Abstand der Über-prüfungsintervalle wird in Abhängigkeit vom Batterietyp, der momentanen Strom-entnahme (Belastungssituation) und ggf. weiteren Kangrößen gewählt und kann zwischen mehreren Minuten (bei unbelasteten Speichern, aus denen momentan keine Energie entnommen wird) und Bruchteilen einer Sekunde betragen.

Der Bordrechner (2) steuert die Energiezufuhr aus den Solarzellen (3) und stellt diese dem Speicher $S_i$ zur Verfügung, der von seinem kapazitiven Zustand zur Ladung am geeignetsten ist. Im vorliegenden Fall dient die zugeführte Solarenergie der Erhaltungsladung des

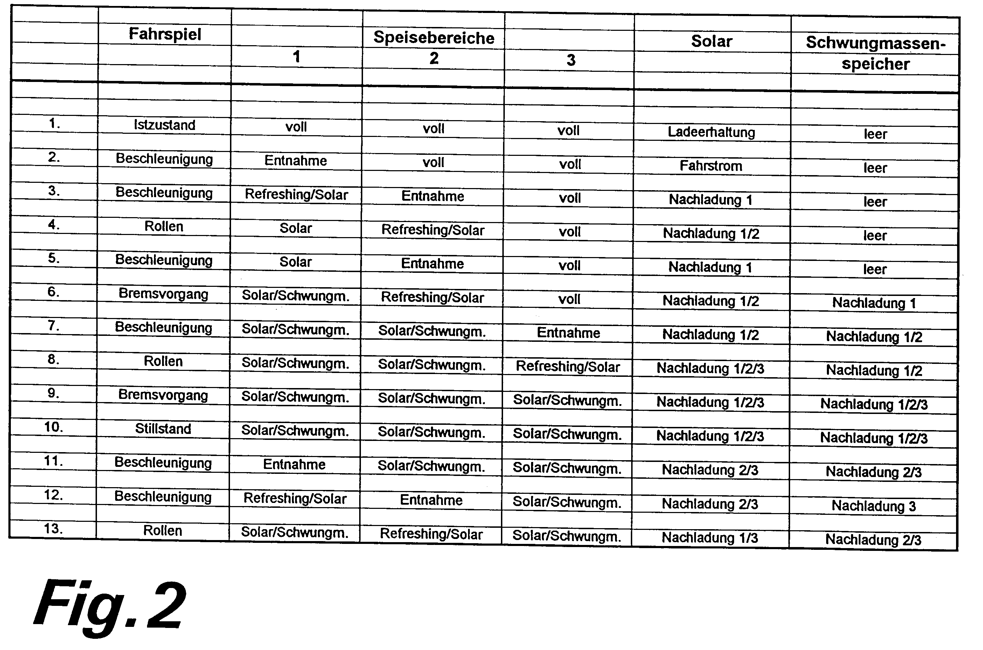

Speichers $S_1$. Falls alle Speicher $S_1$ ... $S_5$ momentan keine Aufnahmefähigkeit besitzen, so wird die Energie bei Fahrbeginn direkt als Fahrstrom in die Fahr- motoren eingespeist (vgl. Istzustand in Fig. 2).

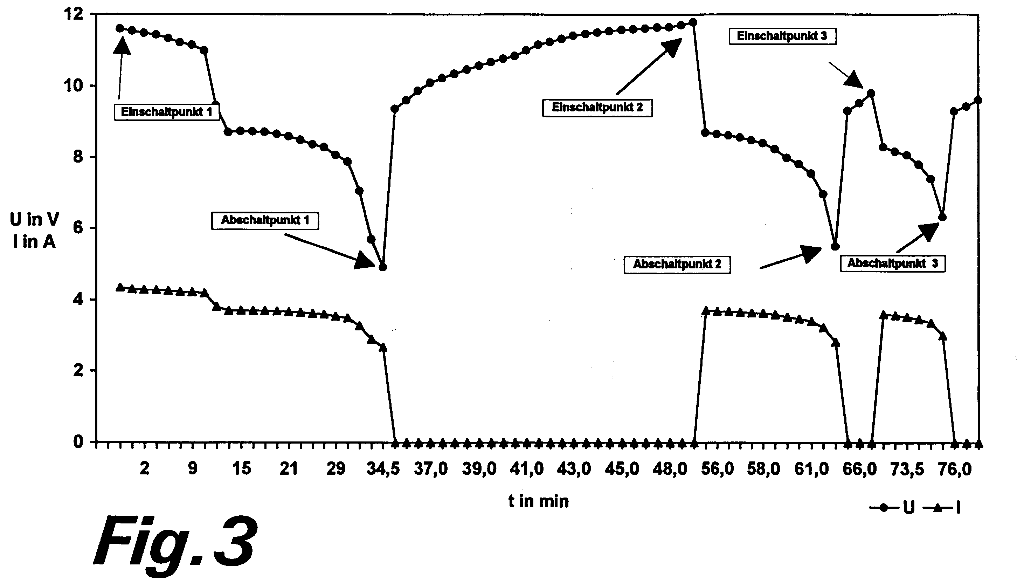

Bei Fahrbeginn (vgl. Einschaltpunkt $EP_1$ der Speicherkennlinie gemäß Fig. 3) wird zunächst Energie zur Beschleunigung des Fahrzeuges (Zustand Z 2 im Fahrspiel gemäß Fig. 2) aus dem Speicher $S_1$ entommen.

Nach Erreichen einer Restkapazität von etwa 30 % dieses Blei-Säure-Akkumulators, gekennzeichnet durch einen signifikanten Abfall der Spannung und des Stromes um ca. 20 % innerhalb eines Zeitintervalles von einer Sekunde gegenüber dem vorherigen Meßzyklus, schaltet der Bordrechner (2) beim Erreichen des Abschaltpunktes $AP_1$ (vgl. Fig. 3) auf den Speicher $S_2$ um (Zustand Z 3).

In der Zeit nach der Umschaltung vom Speicher $S_1$ auf $S_2$ tritt im Speicher $S_1$ eine Erhöhung der Spannung durch den Refreshingeffekt auf (Zustand Z 3). Der Bordrechner (2) überwacht den zunächst steilen Spannungsanstieg bis dieser abflacht und sich auf einem empirisch ermittelten Niveau einstellt.

Während des Refreshingvorganges wird entsprechad dem aktuellen Energieaufnahmevermögen zusätzliche externe Energie (Solarenergie) in den Speicher $S_1$ eingespeist (Zustand Z 3). Nach Abschluß der Anfahrbeschleunigung (Abschaltpunkt $AP_1$ des Speichers $S_1$ ist erreicht, Umschaltung auf Speicher $S_2$ wurde vorgenommen; vgl. Zustand Z 3) wird während des nachfolgenden Rollvorganges (Zustand Z 4) des Fahrzeuges der für die Nachladung geeignete Speicher vom Bordrechner (2) durch die Diagnose des Istzustandes der Speicher $S_i$ ermittelt.

Im vorliegenden Beispiel ist im Speicher $S_1$ das Refreshing bereits abgeschlossen; es erfolgt eine weitere Zufuhr von Solarenergie. Im Speicher $S_2$ ist der Refreshingprozeß noch nicht abgeschlossen. Aufgrund des momentanen Energieaufnahmevermögens des Speichers $S_2$ wird auch diesem Speicher Solarenergie zugeführt. Der optimale Ladestrom $I_{opt}$ wird dabei vom Bordrechner (2) vorgegeben, auf dem die Kennlinien I(t), U(t), R(t) aller Akkumulatoren (Speicher $S_1$ ... $S_3$) des Busses gespeichert sind (vgl. Zustand Z 4 des Fahrspieles).

Verkehrsbedingt wird das Fahrzeug erneut beschleunigt, wobei die notwendige Energie für die Fahrmotore aus dem Speicher $S_2$ entnommen wird. Gleichzeitig erfolgt eine weitere Nachladung des Speichers $S_1$ durch die Solarzellen (Zustand Z 5).

Bei der Verzögerung des Fahrzeuges (Bremsvorgang; Zustand Z 6) wird die Brems-energie von dem, als Generator geschalteten Fahrmotor (5) in elektrische Energie umgewandelt, die zum Antrieb des Schwungmassenspeichers (4) verwendet wird.

Zeitgleich mit einem erneuten Beschleunigungs- und einem weiteren Rollvorgang des Fahrzeuges (Zustand Z 7 und Z 8) wird Ober den Generator (6) die im Schwungmassenspeicher (4) enthaltene kinetische Energie in elektrische Energie umgewandelt und nach Analyse des Ladezustandes und des Aufnahmevermögens den vom Bordrechner ermit-telten Speichern $S_1$ und $S_2$ zugeführt.

Aus dem Schwungmassenspeicher (4), der als Zwischenspeicher SZ fungiert, wird durch den Bordrechner (2) über die Steuerung (7) in Abhängigkeit vom momentanen Energieaufnahmevermögen der Speicher $S_1$ ... $S_3$ elektrische Energie in die einzelnen Speicher eingeleitet. Die schonende Ladung der Speicher erfolgt auf der Grundlage des bekannten Kennlinienverlaufes der einzelnen Akkumulatoren. Änderungen des Kennlinienverhaltens, die der Bordrechner registriert, führen dazu, daß der Ladestrom für den betreffenden Speicher geändert wird.

Bei dem sich anschließenden Bremsvorgang (Zustand Z 9) wird die kinetische Energie des Fahrzeuges zur Aufladung des Schwungmassespeichers (4) genutzt. Gleichzeitig wird Solarenergie den Speichern $S_1$ ... $S_3$ zugeführt.

Beim nachfolgenden Stillstand (Zustand Z 10) des Fahrzeuges wird die so gespeicherte Bewegungsenergie entsprechend dem tatsächlichen Aufnahmevermögen den Speichern $S_1$ ... $S_3$ zugeführt. Aufgrund der momatanen Kapazität der drei Speicher $S_1$ ... $S_3$ kann zusätzlich Energie von den Solarzellen (3) zugeführt werden.

Beim anschließenden Anfahren (Beschleunigungsphase; Zustand Z 11) wird erneut Energie aus dem Speicher $S_1$ entnommen. Parallel dazu wird weiterhin in elektrische Energie gewandelte kinetische Energie des Schwungmassespeichers (4) auf die Speicher $S_2$ und $S_3$ übertragen. Zeitgleich erfolgt eine weitere Ladung dieser beiden Speicher mit Solarenergie.

Wie zu Beginn des Fahrspieles erfolgt bei der weiteren Beschleunigung (Zustand Z 12) ein Umschalten vom Speicher $S_1$ auf $S_2$, von dem die weitere Energie zum Betrieb der Fahrmotore entnommen wird. In dieser Phase setzt erneut der Refreshing-Effekt im Speicher $S_1$ ein.

Aufgrund des momentanen Aufnahmevermögens des Speichers $S_1$ wird diesem Speicher zeitgleich Solarenergie zugeführt. Der Speicher $S_3$ wird während dieser Phase mit Energie aus dem Schwungmassespeicher und der Solarzelle (3) nachgeladen.

Beim abschließenden Rollvorgang des Fahrzeuges (Zustand Z 13) ist der Refreshing-Effekt im Speicher $S_1$ bereits abgeschlossen. Aufgrund des momentanen Energieaufnahmevermögens wird Speicher $S_1$ parallel mit Energie der Solarzellen (3) und des Schwungmassespeichers (4) geladen.

Der Speicher $S_2$ befindet sich in der Refreshing-Phase. Aufgrund des gegenwärtigen Energieaufnahmevermögens des Speichers $S_2$ wird bereits jetzt zusätzliche Energie von den Solarzellen (3) zugeführt.

Speicher $S_3$, dem während des vorangegangenen Lastspieles zuletzt Energie entnommen wurde, weist zu diesem Zeitpunkt das größte Energieaufnahmevermögen auf. Deshalb erfolgt eine weitere Aufladung des Speichers $S_3$ mit Solarenergie und kinetischer Energie, die aus dem Schwungmassespeicher (4) übertragen wird.

Dieser Prozeß wiederholt sich, bis alle Speicher $S_1$ ... $S_3$ ihre zulässige, minimale Restkapazität $C_{iRest}$ auch durch Refreshing und/oder Nachladung von Solarenergie oder umgewandelter kinetischer Energie aus dem Schwungmassenspeicher (4) nicht mehr erhöhen können.

Dem Fahrer des Busses wird jetzt signalisiert, daß eine Nachladung der Speicher $S_1$ ... $S_3$ aus einer fahrzeugexternen Energiequelle notwendig ist und zur Weiterfahrt nur noch ein Reservespeicher $S_{Res}$ (bzw eine definierte Reservekapazität eines Speichers $S_1$ ... $S_3$) zur Verfügung steht.

**Ausführungsbeispiel 2:**

Es zeigen:

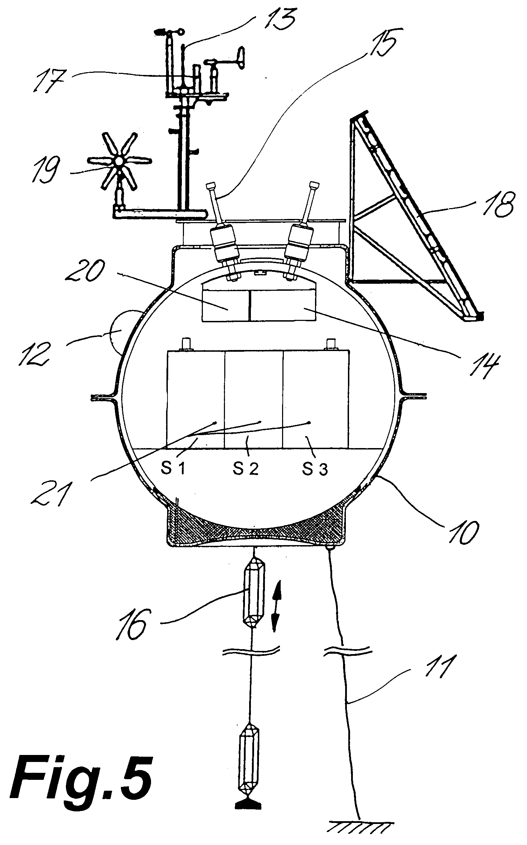

Fig. 5     den schematisierten Aufbau eines gefesselten Meßgeräteträgers mit den wichtigsten Baugruppen in einer Schnittdarstellung,

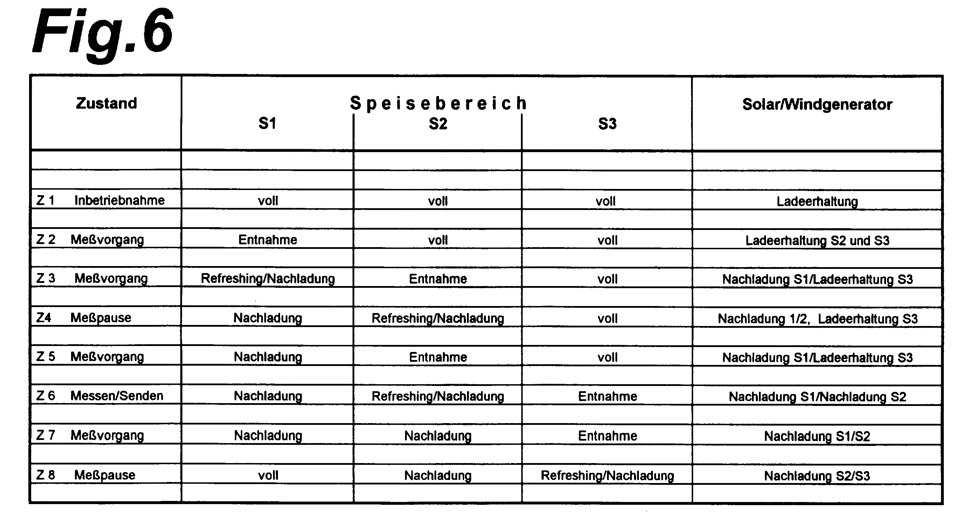

Fig. 6     das beispielhafte Diagramm eines Arbeitsintervalls des Meßgeräteträgers,

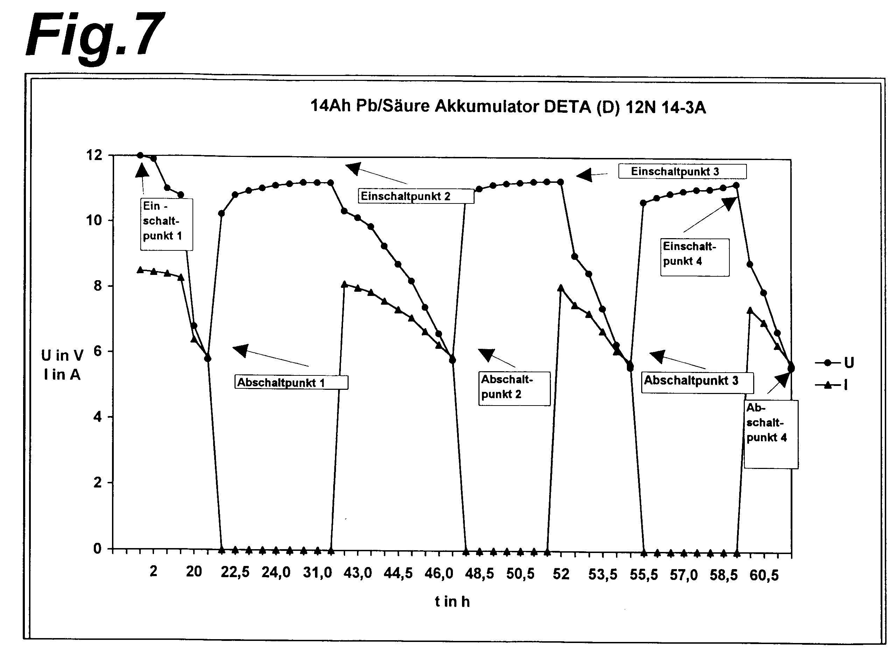

Fig. 7     den Kennlinienverlauf U(t) und I(t) eines verwendeten Bleiakkumulators,

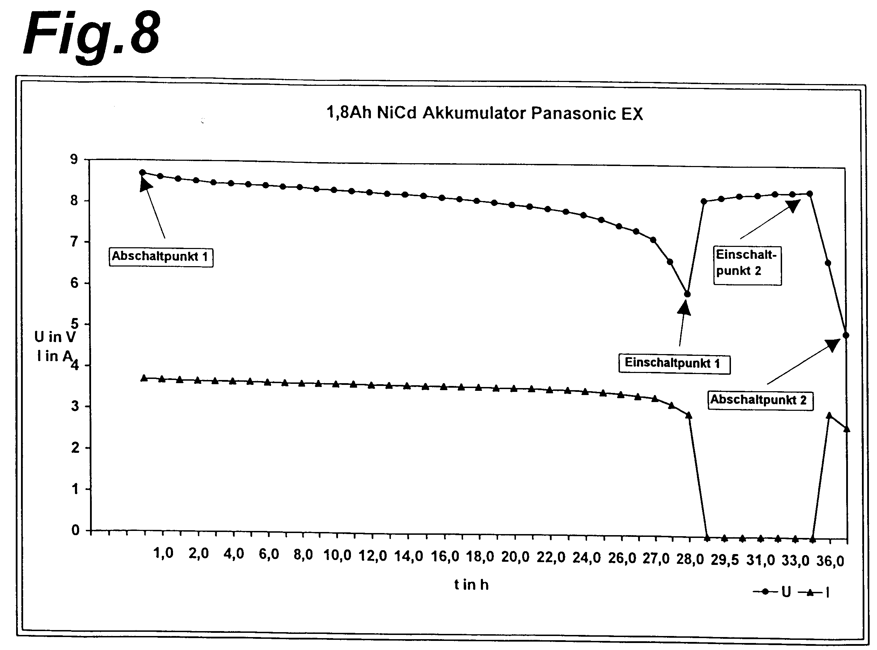

Fig. 8     den Kennlinienverlauf U(t) und I(t) eines eingesetzten Nickel-Cadmium-Akkumulators.

Eine Anordnung zur Optimierung des Energiemanagements wird auf einem unbemannten Meßgeräteträger eingesetzt, der in der Meeresforschung Verwendung findet. Die Meßgeräteträger werden je nach Meßaufgabe frei driftend oder gefesselt eingesetzt. Bedingt durch die extremen Einsatzbedingungen werden an alle Baugruppen hohe tech-nische Anforderungen hinsichtlich der mechanischen und chemischen Belastbarkeit gestellt. Das Energieversorgungssystem der Meßgeräteträger ist so konzipiert, daß ein zyklischer, präventiver Austausch der Akkumulatoren durch Versorgungsschiffe im Einsatzgebiet erfolgt.

Quasistationäre Meßgeräteträger dienen der Überwachung der Meeresumwelt und der Beobachtung von Umweltveränderungen, insbesondere in stark belasteten, küstennahen Gewässern, wie der Nord- und Ostsee. Dazu sind die Meßgeräteträger auf dem Meeresboden verankert. Die an Bord installierten Geräte erfassen klimatische, chemische und biologische Meßdaten, die archiviert oder unmittelbar über Wettersatelliten an Bodenstationen weitergeleitet werden.

Der Meßgeräteträger besitzt 3 Speicher $S_1$ ... $S_3$ mit unterschiedlicher Nennkapazität $C_{Nenn,}$, die in der Nähe des Schwerpunktes des Geräteträgers angeordnet und über das Bordnetz mit den Verbrauchern verbunden sind. Alle Speicher $S_1$ ... $S_3$ sind bei Inbetriebnahme des Geräteträgers vollständig geladen.

Auf der Oberfläche des Geräteträgers sind Solarpanele (18) und ein Windgenerator (19) zur externen Gewinnung von Elektroenergie angeordnet, deren Energie in das Bordnetz eingespeist wird.

Bei Inbetriebnahme des Geräteträgers (Zustand 1) und Aktivierung der Steuerung beginnt der Bordrechner (20) mit der permanenten Kontrolle der Kapazitäten $C_{1Ist}$ ... $C_{3Ist}$ aller Speicher $S_1$ ... $S_3$. Dazu wird bei jedem Speicher $S_i$ die zeitliche Änderung von Strom und/oder Spannung und/oder Widerstand oder dem Produkt oder dem Quotienten der vorgenannten Kenngrößen über der Zeit ermittelt. Der zeitliche Abstand der Über-prüfungsintervalle wird in Abhängigkeit vom Batterietyp, der momentanen Strom-entnahme (Belastungssituation) und ggf. weiteren Kenngrößen gewählt und kann zwischen mehreren Stunden (bei unbelasteten Speichern, aus denen momentan keine Energie entnommen wird) und Bruchteilen einer Sekunde betragen.

Der Bordrechner (20) steuert die Energiezufuhr aus den Solarpanelen (18) und dem Windgenerator (19) und stellt diese dem Speicher $S_1$ zur Verfügung, der von seinem kapazitivem Zustand zur Ladung am geeignetsten ist. Im vorliegendem Fall dient die zugeführte Solar-und/oder Windenergie der Erhaltungsladung des Speichers $S_1$. Falls alle Speicher $S_1$ ... $S_3$ momentan keine Aufnahmefähigkeit besitzen, so wird die Energie bei Beginn des Arbeitsintervalls direkt für die Verbraucher eingespeist (vgl. Istzustand in Fig. 6).

Bei Beginn der Messvorgänge (vgl. Einschaltpunkt EP1 der Speicherkennlinie gemäß Fig. 7) wird zunächst Energie zur Versorgung der Verbraucher (12), (15), (17) (vgl. Zustand 2 im Arbeitszyklus gemäß Fig. 6) aus dem Speicher S1 entnommen.

Nach Erreichen einer Restkapazität von etwa 30 % dieses Blei-Säure-Akkumulators, gekennzeichnet durch einen signifikanten Abfall der Spannung und des Stromes um ca. 20 % innerhalb eines Zeitintervalles von einer Sekunde gegenüber dem vorherigen Meßzyklus, schaltet der Bordrechner (2) beim Erreichen des Abschaltpunktes AP 1 (vgl. Fig. 7) auf den Speicher S2 um (Zustand 3).

In der Zeit nach der Umschaltung vom Speicher S1 auf S2 tritt im Speicher S1 eine Erhöhung der Spannung durch den Refreshingeffekt auf (Zustand 3). Der Bordrechner (2) überwacht den zunächst steilen Spannungsanstieg bis dieser abflacht und sich auf einem empirisch ermittelten Niveau einstellt.

Während des Refreshingvorganges wird entsprechend dem aktuellen Energieaufnahmevermögen zusätzliche externe Energie (Solar- und/oder Windenergie) in den Speicher S1 eingespeist (Zustand 3).

Nach Abschluß der Meßvorgänge (Abschaltpunkt AP1 des Speichers S1 ist erreicht, Umschaltung auf Speicher $S_2$ wurde vorgenommen, vgl. Zustand 3) wird während der nachfolgenden Pause (Zustand 4) der für die Nachladung geeignete Speicher vom Bordrechner (20) durch die Diagnose des Istzustandes der Speicher $S_1$ ... $S_3$ ermittelt.

Im vorliegendem Beispiel ist im Speicher $S_1$ das Refreshing bereits abgeschlossen, es erfolgt eine weitere Zufuhr von Solar- und/oder Windenergie. Im Speicher $S_2$ ist der Refreshingprozeß noch nicht abgeschlossen. Aufgrund des momentanen Energieaufnahmevermögens des Speichers $S_2$ wird auch diesem Speicher Solar- und/oder Windenergie zugeführt. Der optimale Ladestrom $I_{opt}$ wird dabei vom Bordrechner (20) vorgegeben, auf dem die Kennlinien I(t), U(t), R(t) aller Akkumulatoren (Speicher $S_1 ... S_3$) des Geräteträgers gespeichert sind (vgl. Zustand 4 des Arbeitsintervalls).

Bei einer kurzfristigen Änderung der für die Messungen relevanten Umweltdaten (Lufttemperatur, Windgeschwindigkeit, Salzgehalt) wird über Sensoren ein weiterer Meßvorgang initiiert, wobei die notwendige Energie für die Verbraucher aus dem Speicher $S_2$ entnommen wird. Gleichzeitig erfolgt eine weitere Nachladung des Speichers $S_1$ durch Solar-und/oder Windenergie (Zustand 5).

Durch die Besonderheit der ermittelten Meßergebnisse ist parallel zu weiteren Messungen eine sofortige Weiterleitung der Daten über einen Richtfunksender notwendig. Diese erhöhte Belastung führt zum Erreichen des Abschaltpunktes AP 2 (vgl. Fig. 7) und veranlaßt den Bordrechner (20) zur Umschaltung auf den Speicher $S_3$ (Zustand 6). Zugleich erfolgt eine Nachladung des Speichers $S_1$ mit Solar- und/oder Windenergie und im Speicher $S_2$ setzt der Refreshingeffekt ein.

Nach Beendigung der Datenübertragung durch den Sender (14) werden die normalen Meßvorgänge fortgesetzt (Zustand 7). Zu diesem Zeitpunkt ist im Speicher $S_2$ der Refreshingeffekt bereits abgeschlossen. Die Speicher $S_1$ und $S_2$ werden entsprechend ihrem momentanen Energieaufnahmevermögen mit Solar- und/oder Windenergie ge-laden.

Die schonende Ladung erfolgt auf der Grundlage des bekannten Kennlinienverlaufes der einzelnen Akumulatoren. Änderungen des Kennlinienverhaltens, die der Bordrechner (20) registriert, führen dazu, daß der Ladestrom für den betreffenden Speicher geändert wird. In der folgenden Meßpause (Zustand 8) ist der Refreshingeffekt und die Nachladung im Speicher $S_1$ abgeschlossen. Im Speicher $S_2$ ist der Refreshingeffekt ebenfalls abgeschlossen. Er befindet sich in der Phase der Nachladung durch Solar- und/oder Windenergie. Im Speicher $S_3$ setzt der Reffeshingeffekt ein. Aufgrund des gegenwärtigen Energieaufnahmevermögens des Speichers $S_3$ wird bereits jetzt zusätzliche Energie durch Solar- und/oder Windenergie zugeführt. Dieser Prozeß wiederholt sich, bis alle Speicher $S_1 ...$ $S_3$ ihre zulässige, minimale Restkapazität $C_{Rest}$ auch durch Refreshing und/oder Nachladung von Solar- und/oder Windenergie nicht mehr erhöhen können.

Über Datenfunk wird jetzt der Mutterstation des Meßgeräteträgers signalisiert, däß eine Nachladung der Speicher $S_1 ... S_3$ aus einer externen Energiequelle bzw. ein Austausch der Akkumulatoren innerhalb einer Sicherheitsfrist notwendig ist. Zum weiteren Betrieb des Meßgeräteträgers steht eine definierte Reservekapazität eines Speichers $S_1 ... S_3$) zur Verfügung steht.

**Ausführungsbeispiel 3:**

Die Anordnung zur Optimierung des Energiemanagements wird bei der Energie-versorgung von Verkehrszeichen, Verkehrswarn- und -leiteinrichtungen eingesetzt. Diese Anlagen befinden sich oft weit entfernt von Energieversorgungsnetzen und müssen über einen längeren Zeitraum zuverlässig und möglichst wartungsarm betrieben werden. Aufgabe von Verkehrswarneinrichtungen ist es, autonom Meßdaten über lokale Witterungszustände zu sammeln, diese Informationen auszuwerten und mit Hilfe von optischen und/oder akustischen Signaleinrichtungen an den Kraftfahrern zu übermitteln. Dazu ist es notwendig, daß permanent oder in Intervallen bestimmte Daten, wie z. B. die Luftfeuchtigkeit und die Lufttemperatur gemessen werden.

Ein besonderer Anwendungsfall ist die permanente Sichtweitenüberwachung mittels Fototechnik in latent nebelgefährdeten Gebieten, um die Autofahrer vor plötzlich einsetzender Sichtverschlechterung zu warnen. Die zur Erfassung dieser Meßdaten notwendigen elektrischen Meßgeräte und die zur Übermittlung und Darstellung der Informationen benötigten Verstärker und Displays bzw. Signaltafeln sind elektrische Verbraucher mit einem relativ hohen Leistungsbedarf.

Die Energieversorgung derartiger Einrichtungen erfolgt mit Akkumulatoren, die durch lokale Energieerzeuger in Form von Solarzellen oder Windgeneratoren nachgeladen werden. Die zum Langzeitbetrieb der Verkehrswarneinrichtung notwendige Kapazität der Akkumulatoren wird in mehrere Teilkapazitäten aufgeteilt. Abhängig vom jeweiligen, tageszeitlich schwankenden Energiebedarf werden nur die Teilkapazitäten aktiviert, die zur Deckung des momentanen Energiebedarfes notwendig sind. Die nicht beanspruchten Teilkapazitäten werden nachgeladen oder befinden sich in der Erholungsphase. Die Akkumulatoren, bei denen nach einer Belastungsperiode die Erholungsphase abgeschlossen ist, werden durch das verfahrensgemäße Energiemanagement energieoptimal und schonend nachgeladen.

Bei Unterschreiten einer kritischen Untergrenze der verfügbaren Speicherkapazitäten wird über eine angeschlossene digitale Mobilfunkeinrichtung eine Warnmeldung an die zuständige Verkehrsüberwachungseinrichtung geleitet, die einen Austausch der Akkumulatoren veranlaßt.

## Verzeichnis verwendeter Bezugszeichen

| | |
|---|---|
| (1) | Schaltungeinrichtung |
| (2) | Rechner |
| (3) | Solarzellen |
| (4) | Schwungmassespeicher |
| (5) | Fahrmotor |
| (6) | Generator |
| (7) | Steuerung |
| (10) | Trägereinheit (Schwimmkörper) |
| (11) | Verankerung |
| (12) | Sensor |
| (13) | Antenne |
| (14) | Sender/Empfänger |
| (15) | Sensor |
| (16) | Probenehmer |
| (17) | Temperaturfühler |
| (18) | Solarpanele |
| (19) | Windgenerator |
| (20) | Bordrechner |
| (21) | Speicher (Akkumulatoren) |
| $AP_1 ... AP_n$ | Abschaltpunkte (Zeitpuntkte des Abschaltens eines Speichers vom Verbraucher) |
| $C$ | Kapazität |
| $C_1 ... C_n$ | Kapazitäten des ersten bis n-ten Speichers $S_1 ... S_n$ |
| $C_{ges}$ | Gesamtkapazität |
| $C_{Ist}$ | momentane Ist-Kapazität |
| $C_{iRest}$ | Rest-Kapazität des i-ten Speichers |
| $C_{kIst}$ | momentane Ist-Kapazität des k-ten Speichers $S_k$ |
| $C_{kNenn}$ | nominelle Nenn-Kapazität des k-ten Speichers $S_k$ |
| $C_{tmax}$ | momentane maximale Ist-Kapazität |
| EP | Einschaltpunkt (Zeitpunkt des Zuschaltens eines Speichers an den Verbraucher) |
| n | Anzahl der Speicher |
| $S_1 ... S_i, S_k, S_n$ | Speicher (Akkumulatoren) |
| $S_{Res}$ | Reservespeicher |
| SZ | Zwischenspeicher |
| t | Zeit |
| $t_{max}$ | Zeitpunkt des Erreichens der momentanen maximalen Ist-Kapazität eines Speichers |
| UP | Umschaltpunkt (Ein- bzw. Abschaltpunkt der Kennlinie eines Speichers) |

## Patentansprüche

1. Verfahren und Anordnung zur Optimierung des Energiemanagements autonomer Energieversorgungssysteme, deren Energieversorgung über Akkumulatoren erfolgt,
dadurch gekennzeichnet,

daß die zeitliche Änderung der Kapazität dC/dt der Speicher $S_1 ... S_n$ des Energie-versorgungssystems ermittelt wird,
daß bei Überschreiten eines wählbaren, kritischen Sollwertes der zeitlichen Änderung der Kapazität dC/dt eines Speichers $S_i$ über der Zeit der Energiefluß vom bisher genutzten Speicher $S_i$ zum Verbraucher getrennt und ein anderer Speicher $S_k$ ausgewählt wird, von dem die Energiezufuhr zum Verbraucher erfolgt,
wobei die Auswahl dieses Speichers $S_k$ unter der Bedingung erfolgt, daß die momentane Ist-Kapazität

$$C_{kist} = I_k * t$$

des Speichers $S_k$ im Vergleich zu den anderen Speichern $S_1 ... S_n$ ein Maximum ist,
daß der bisher genutzte Speicher $S_i$ während eines bestimmbaren Zeitintervalles nicht erneut zur Energieabgabe ausgewählt wird, um den Refreshingeffekt des Speichers $S_i$ zu nutzen und daß der Speicher $S_i$ nicht vor Erreichen des nächsten Einschaltpunktes $EP_i$ der U(t)-oder I(t)- oder R(t)-Kennlinie oder einer, aus den vorgenannten Kenngrößen ermittelten Kennlinie für eine erneute Energieabgabe freigegeben wird.

2. Anordnung zur Realisierung des Verfahrens nach Anspruch 1,
dadurch gekennzeichnet,

daß das Energieversorgungssystem n Speicher $S_1 ... S_n$ aufweist,
daß alle Speicher $S_1 ... S_n$ elektrisch leitend mit dem Verbraucher verbunden sind,
daß die Zuschaltung eines Speichers $S_i$ zum Verbraucher über eine Schaltungseinrichtung (1) erfolgt, die mit einem Rechner (2) in Verbindung steht,
wobei der Rechner (2) die momentane Ist-Kapazität $C_{1Ist}(t) ... C_{nIst}(t)$ aller Speicher $S_1 ... S_n$ ermittelt und die Speicher auswählt, die für eine Energieentnahme und eine Energiezufuhr optimal geeignet sind,
daß das Energieversorgungssystem Einrichtungen zur Energiegewinnung aufweist, die über den Rechner (2) mit den Speichern $S_1 ... S_n$ und/oder dem Verbraucher in Wirkverbindung stehen.

3. Anordnung nach Anspruch 2,

dadurch gekennzeichnet,

daß die Speicher $S_1$ ... $S_n$ gleiche oder unterschiedliche Nennkapazitäten $C_{1Nenn}$ ... $C_{kNenn}$ besitzen.

4. Anordnung nach Anspruch 2 oder 3,
dadurch gekennzeichnet,

daß die Speicher $S_1$ ... $S_n$ baugleich sind.

5. Anordnung nach Anspruch 2 oder 3,
dadurch gekennzeichnet,

daß die Speicher $S_1$ ... $S_n$ einen unterschiedlichen Aufbau und/oder unterschiedliche Nennkapazität $S_{iNenn}$ aufweisen.

6. Anordnung nach Anspruch 2,
dadurch gekennzeichnet,

daß die Einrichtungen zur Energiegewinnung als Solarzellen oder Windkraftgeneratoren ausgebildet sind.

7. Anordnung nach Anspruch 2,
dadurch gekennzeichnet,

daß die Einrichtung zur Energiegewinnung als rotierender Schwungmassespeicher (4) mit Generator (6) ausgebildet ist, der die kinetische Energie der mobilen Einrichtung mit dem integrierten Energieversorgungssystems bei verzögerten Bewegungen aufnimmt, speichert und an die Verbraucher und/oder ladefähige Speicher $S_1$ ... $S_n$ abgibt.

8. Verwendung der Anordnung nach einem der Ansprüche 2 bis 7,
dadurch gekennzeichnet,

daß die Anordnung zur Optimierung des Energiemanagements Teil eines Verkehrs-oder Transportmittels, wie eines Kraftfahrzeuges, eines Wasserfahrzeuges oder eines Flugobjektes ist.

9. Verwendung der Anordnung nach einem der Ansprüche 2 bis 7,
dadurch gekennzeichnet,

daß die Anordnung zur Optimierung des Energiemanagements Teil einer autonomen Beleuchtungseinrichtung oder Verkehrseinrichtung ist.

10. Verwendung der Anordnung nach einem der Ansprüche 2 bis 7,

dadurch gekennzeichnet,

daß die Anordnung zur Optimierung des Energiemanagements Teil einer mobilen oder stationären Meß- oder Überwachungseinrichtung ist.

**Fig. 1**

EP 0 936 718 A1

| | Fahrspiel | Speisebereiche | | | Solar | Schwungmassen- speicher |
|---|---|---|---|---|---|---|
| | | 1 | 2 | 3 | | |
| 1. | Istzustand | voll | voll | voll | Ladeerhaltung | leer |
| 2. | Beschleunigung | Entnahme | voll | voll | Fahrstrom | leer |
| 3. | Beschleunigung | Refreshing/Solar | Entnahme | voll | Nachladung 1 | leer |
| 4. | Rollen | Solar | Refreshing/Solar | voll | Nachladung 1/2 | leer |
| 5. | Beschleunigung | Solar | Entnahme | voll | Nachladung 1 | leer |
| 6. | Bremsvorgang | Solar/Schwungm. | Refreshing/Solar | voll | Nachladung 1/2 | Nachladung 1 |
| 7. | Beschleunigung | Solar/Schwungm. | Solar/Schwungm. | Entnahme | Nachladung 1/2 | Nachladung 1/2 |
| 8. | Rollen | Solar/Schwungm. | Solar/Schwungm. | Refreshing/Solar | Nachladung 1/2/3 | Nachladung 1/2 |
| 9. | Bremsvorgang | Solar/Schwungm. | Solar/Schwungm. | Solar/Schwungm. | Nachladung 1/2/3 | Nachladung 1/2/3 |
| 10. | Stillstand | Solar/Schwungm. | Solar/Schwungm. | Solar/Schwungm. | Nachladung 1/2/3 | Nachladung 1/2/3 |
| 11. | Beschleunigung | Entnahme | Solar/Schwungm. | Solar/Schwungm. | Nachladung 2/3 | Nachladung 2/3 |
| 12. | Beschleunigung | Refreshing/Solar | Entnahme | Solar/Schwungm. | Nachladung 2/3 | Nachladung 3 |
| 13. | Rollen | Solar/Schwungm. | Refreshing/Solar | Solar/Schwungm. | Nachladung 1/3 | Nachladung 2/3 |

# Fig.2

EP 0 936 718 A1

**Fig.3**

EP 0 936 718 A1

*Fig.4*

EP 0 936 718 A1

Fig.5

# Fig.6

| Zustand | | Speisebereich | | | Solar/Windgenerator |
|---|---|---|---|---|---|
| | | S1 | S2 | S3 | |
| | | | | | |
| Z 1 | Inbetriebnahme | voll | voll | voll | Ladeerhaltung |
| Z 2 | Meßvorgang | Entnahme | voll | voll | Ladeerhaltung S2 und S3 |
| Z 3 | Meßvorgang | Refreshing/Nachladung | Entnahme | voll | Nachladung S1/Ladeerhaltung S3 |
| Z4 | Meßpause | Nachladung | Refreshing/Nachladung | voll | Nachladung 1/2, Ladeerhaltung S3 |
| Z 5 | Meßvorgang | Nachladung | Entnahme | voll | Nachladung S1/Ladeerhaltung S3 |
| Z 6 | Messen/Senden | Nachladung | Refreshing/Nachladung | Entnahme | Nachladung S1/Nachladung S2 |
| Z 7 | Meßvorgang | Nachladung | Nachladung | Entnahme | Nachladung S1/S2 |
| Z 8 | Meßpause | voll | Nachladung | Refreshing/Nachladung | Nachladung S2/S3 |

EP 0 936 718 A1

# Fig.7

**14Ah Pb/Säure Akkumulator DETA (D) 12N 14-3A**

EP 0 936 718 A1

# Fig.8

1,8Ah NiCd Akkumulator Panasonic EX

EP 0 936 718 A1

**Europäisches Patentamt**

**EUROPÄISCHER RECHERCHENBERICHT**

Nummer der Anmeldung

EP 98 10 2279

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | EP 0 769 837 A (HITACHI) 23.April 1997<br>* Seite 3, Zeile 5 - Seite 6, Zeile 50;<br>Abbildungen 1-7 *<br>--- | 1-6 | H02J1/00<br>H02J7/00 |
| A | US 5 438 250 A (RETZLAFF) 1.August 1995<br>* Spalte 2, Zeile 43 - Spalte 8, Zeile 8;<br>Abbildungen 1-3 *<br>--- | 1-4 | |
| A | DE 44 22 005 A (LENNART) 14.Dezember 1995<br>* Spalte 4, Zeile 9 - Spalte 9, Zeile 35;<br>Abbildungen 1-6 *<br>--- | 1-3,5,8 | |
| A | US 4 649 287 A (NOLA) 10.März 1987<br>* Spalte 2, Zeile 60 - Spalte 7, Zeile 21;<br>Abbildungen 1,2 *<br>--- | 1,2,6-8 | |
| A | FR 2 536 600 A (ANGLADE) 25.Mai 1984<br>* Seite 1, Zeile 1 - Seite 2, Zeile 5;<br>Abbildung 1 *<br>----- | 1,2,9,10 | |

RECHERCHIERTE SACHGEBIETE (Int.Cl.6)

H02J

Der vorliegende Recherchenbericht wurde für alle Patentansprüche erstellt

| Recherchenort | Abschlußdatum der Recherche | Prüfer |
|---|---|---|
| DEN HAAG | 14.Juli 1998 | Calarasanu, P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)